# EUROPEAN PATENT SPECIFICATION

(11) **EP 2 576 263 B1**
(45) Date of publication and mention of the grant of the patent: **29.10.2014**
(21) Application number: 11729360.5
(22) Date of filing: 27.05.2011
(51) Int. Cl.: B60K 15/04

(54) **A TANK CLOSING UNIT**
TANKVERSCHLUSSEINHEIT
UNITÉ DE FERMETURE DE CITERNE

(30) Priority: 28.05.2010 DK 201000470
(43) Date of publication of application: 10.04.2013
(73) Proprietor: Vinge, Carl, 7300 Jelling (DK)
(72) Inventor: Vinge, Carl, 7300 Jelling (DK)
(74) Representative: Nielsen, Charlotte
(86) International application number: PCT/DK2011/000052
(87) International publication number: WO 2011/147415

(56) References cited:
- EP-A2- 1 961 630
- WO-A1-2010/013077
- DE-A1- 19 807 452
- GB-A- 2 343 283
- US-A1- 2007 137 730
- US-A1- 2009 027 200
- US-B1- 6 271 753

## Description

### FIELD OF THE INVENTION

The present invention relates to a tank closing unit comprising a cover and a detector which is adapted to determine when the tank closing unit is removed from an inlet and/or an outlet of a tank. Moreover the present invention relates to a system comprising the tank closing unit and an external receiving unit adapted to receive a signal transmitted from the tank closing unit.

### BACKGROUND OF THE INVENTION

Fuel tanks are often closed by means of a simple cover which is designed to be easily detached such that a driver of a vehicle in an easy manner can remove the cover and refill the tank. However, such easily removable covers can also be easily removed by third persons, who thus can steal the content of the tank. With today's prices on fuel, theft of the content of fuel tanks is an increasing problem.

Moreover some tanks have a content which may not be contaminated or polluted. Examples are tanks containing drinking water and tanks containing chemicals for use in a production e.g. production of a medicament. It is desirable that the content of such tanks are not contaminated or polluted accidently or purposely, e.g. in connection with a terrorist attack.

Disclosed in US 6,271,753 is a device that is built in a lid or cover which is closing the top of a container or bottle and which alerts the user when the container is opened or its content is leaking. According to this invention a switch in the alarm system activates once a user opens the lid or cover.

Disclosed in GB 2 343 283 is a fuel tank alarm system comprising a fuel tank cap incorporating a movement sensor switch which detects the turning of the cap. Alternatively the sensitivity of the movement sensor switch can be adjusted to detect vibrations caused by interference with the body of a fuel tank.

A tank closing unit according to the preamble of claim 1 is known from DE 198 07 452.

Thus a need for a solution allowing an easy removal of the cover while at the same time preventing theft or contamination of the content of the tank.

### DETAILED DESCRIPTION OF THE INVENTION

The present invention relates to a tank closing unit comprising:
- a cover adapted to be attached to an inlet and/or the outlet of a tank; and
- a detector comprising:
- a detector registration unit adapted to determine when the cover is moved relative to the inlet or outlet, or when the detector is removed from the inlet or the outlet, and
- a detector transmitter unit adapted to emit a signal when the cover is moved or removed, wherein the cover comprises a compartment wherein the detector registration unit is provided, and wherein the tank closing unit comprises two parts which are twistable relative to each other and an electrical contact is arranged such that when the two parts are twisted relative to each other, the contact is activated or deactivated, where one of the two parts are coupled to the cover whereby rotation/twisting of the cover causes the contact to be activated or deactivated.

By providing a detector registration unit which is adapted to determine if the detector is removed and a transmitter for transmitting a signal to an external unit, theft or contamination of the content of the tank may be prevented or stopped. In one embodiment, the inlet or outlet is closed when the cover is attached to the tank. In one embodiment, a seal is provided between the inlet/outlet and the cover such that the inlet/outlet is sealingly closed when the cover is attached to the tank. In an alternative embodiment, the cover is adapted to allow passage e.g. flow of content in one direction through the cover, when the cover is attached to the outlet/inlet. In the latter embodiment, the cover may be adapted to allow fluid (e.g. fuel) to be pumped or poured into the tank, as the cover comprises a one-way valve which is open in an inwards flow-direction.

In the context of the present invention, the term "inlet/outlet" shall be understood as "inlet and/or outlet".

The cover may be adapted to be fastened to the inlet/outlet by means of a threaded connection. Alternatively or as a supplement, the cover may be secured to the inlet/outlet by means of a securing element which is adapted to allow the cover to be secured to the inlet/outlet by means of a lock such as a padlock. In an alternative embodiment, the lock may form an integral part of the cover.

Examples of a tank are a fuel tank, a drinking water tank, a tank containing a medicament, a tank containing a chemical e.g. for use in an industrial process. The tank may be adapted to contain one or more of: a gas, a liquid and a mass of solid particles/elements.

The detector is adapted to determine if the cover is rotated relative to the inlet/outlet, e.g. when a person tries to unscrew the cover from the inlet/outlet. Alternatively or as a supplement, the detector may be adapted to determine if the cover is moved axially relative to the inlet/outlet. Moreover, the cover may be adapted to determine when the cover is moved in a direction transverse to the axial direction of the inlet/outlet.

The detector may be adapted to determine when the detector is removed from the outlet. In one embodiment, the detector is adapted to determine when the cover is brought out of contact/engagement with the inlet/outlet. In another embodiment, the detector is adapted to determine when the cover has been removed a predetermined distance from the inlet/outlet, such as 2 cm, such as 4 cm, such as 6 cm, such as 8 cm, such as 10 cm, such as 15 cm, such as 25 cm, such as 50 cm, such as 100 cm, such as 200 cm. The detector transmitter unit is adapted to transmit a signal when the cover is moved or removed, e.g. relative to the inlet/outlet. The signal may be an acoustic signal and/or a tactile signal and/or a visual signal. Alternatively or as a supplement, the detector transmitter unit may be adapted to transmit an electromagnetic signal when the cover is moved or removed. Examples of such electromagnetic signals are: an ultraviolet signal, a radio signal, light within the visual spectrum, an infrared signal.

In one embodiment, the detector is detachably attachable to the cover. By "detachably attachable" shall be understood that the cover may be detached and re-attached. In another embodiment, the detector is permanently attached/secured to the cover. By "permanently attached/secured" shall be understood that the detector cannot be removed from the cover by hand and without tools. In one embodiment, the detector, the detector registration unit and/or the detector transmitter unit forms an integral part of the cover, such that the detector cannot be removed from the cover without damaging the detector and/or the cover.

For various embodiments the cover may comprise two cover parts such as an outer gripping part and an inner insertion part which are integrated so that they are movable in relation to each other by friction e.g. at rotation. Here the detector registration unit and/or the detector transmitter unit may be integrated in a compartment formed between the said two cover parts.

Even further the two cover parts may be established so as to engage when the two cover parts are rotated in relation to each other whereby e.g. a switch unit that monitors the position of the two cover parts relative to each other may initiate an alarm.

For various embodiments of the invention, the integrated gripping part and insertion part forming the cover are made so that the physical dimensions as well as the form of the cover is substantially similar to original tank covers without integrated detector systems. The detector registration unit may comprise one or more of a magnetic sensor, an acceleration sensor and an electrical contact. The magnetic sensor may be arranged to determine the presence of a magnetic material provided in the inlet/outlet. Alternatively, the magnetic sensor may comprise a magnet and a sensor which is adapted to determine when the inlet/outlet forms a yoke contacting at the north and south pole of the magnet.

The acceleration sensor may be adapted to determine when a user twists the cover e.g. in order to unscrew/ remove the cover. The acceleration sensor may be adapted to determine when the acceleration of the cover is above a predetermined threshold.

In one embodiment, the detector comprises an electrical contact which is arranged such that when the cover is fully screwed onto the inlet/outlet the electrical contact is activated or deactivated and when the cover is twisted away from the fully on-screwed position, the electrical contact is deactivated or activated, respectively. The electrical contact may be arranged to abut a rim of the inlet/outlet, when the cover is screwed fully onto the inlet/outlet. Alternatively, the electrical contact may be arranged to abut a peripheral surface of the inlet/outlet. The tank closing unit comprise two parts which are twistable relative to each other and the electrical contact may be arranged such that when the two parts are twisted relative to each other, the contact is activated or deactivated. One of the two parts is coupled to the cover, whereby rotation/twisting of the cover causes the contact to be activated or deactivated. In one embodiment, the detector comprises a proximity sensor e.g. based on electromagnetic radiation, which is adapted to determine when the inlet/outlet is located within the proximity of the cover. Thus if the cover is removed, the proximity sensor will determine that the inlet/outlet is no longer located within the proximity of the cover.

In one embodiment, the tank closing unit further comprises a key which is adapted to deactivate the detector. The key may be a physical key which is adapted to engage a mechanical lock which when unlocked deactivates or activates at least a part of the detector. Alternatively or as a supplement, the key may be an electronic key which when brought into physical contact with the cover and/or the detector is electrically connected with the detector registration unit and/or the detector transmitter unit such that one of said units are deactivated.

In yet another embodiment, the detector comprises a detector receiver unit adapted to receive an electromagnetic signal and/or an electrically signal, and wherein the key comprises a key transmitter unit which is adapted to communicate with the detector receiving unit. The key may be adapted to emit an ultraviolet signal and/or an infrared signal and/or a radio signal and/or light within the visual spectrum. The key transmitter unit and detector receiver unit may be adapted for one-way or two-way communication.

In one embodiment, the detector receiving unit and the key transmitter unit are adapted to communicate by means of coded signals. It will be appreciated that by coding the signal, the risk of a third party circumventing the system may be reduced.

In one embodiment, the tank closing unit further comprises a vandalism detector which is adapted to detect if the detector is subjected to vandalism. The vandalism detector may be adapted to determine if the tank closing unit is subjected to hits by an object e.g. a hammer. In order to facilitate such detection, the vandalism detector may comprise an acceleration sensor, which is adapted to determine the vandalism based on sudden changes in the acceleration of the tank closing unit.

In one embodiment, the detector has a unique ID for identification of the detector. An advantage of providing the detector with an ID is that it may be determined which of the detectors are removed. This is advantageous when a company owns a plurality of vehicles. In one embodiment, tank closing unit comprises a unit for determination of the geographical location, such as a GPS unit or a telecommunication unit. Moreover, the tank closing unit may be adapted to communicate the position of the tank closing unit to an external device. Such communication may e.g. be carried out by means of a telecommunication unit provided in the tank closing unit. In one embodiment, the detector is provided in the form of a collar adapted to be arranged around the inlet/outlet such that when the cover is fastened to the inlet/outlet, the detector registration unit will register the cover. As an example, the collar may be adapted to be fastened to the outer surface of the inlet/outlet. In one embodiment, the collar comprises a threaded surface allowing the collar and the cover to be screwed together. In one embodiment, the threaded surface of the collar is arranged such that when the cover is screwed onto the inlet/outlet, the cover will additionally be screwed onto the collar.

In a second aspect, the present invention relates to a detector for use in the tank closing unit according the first aspect of the invention. The detector according to the second aspect may comprise any combination of features and elements of the detector according to the first aspect.

In a third aspect, the present invention relates to a system comprising a tank closing unit according to the first aspect of the invention and an external receiver unit adapted to detect a signal transmitted from the detector transmitter unit. In a fourth aspect, the present invention relates to a system comprising a detector according to the first aspect and an external receiver unit adapted to detect a signal transmitted from the detector transmitter unit.

In the following the inventions according to the third and the fourth aspect are described in further detail:
In one embodiment, the external receiver unit may be adapted to transmit a signal to an external device such as an alarm central or the owner of the vehicle or to the mobile telephone of the driver or owner of the vehicle.

In one embodiment, the external receiving unit is attached to or mounted on the tank either such that the external receiving unit is hidden or visually detectable. In another embodiment, the external receiving unit is attached to or mounted on a vehicle which comprises the tank. In yet another embodiment, the external receiving unit is arranged on a parking area where vehicles comprising the tank closing unit parks.

The external receiving unit may be adapted to activate an acoustic and/or a tactile and/or visual signal, and/or to transmit a signal to an external unit. The signal may be an electromagnetic signal, such as an ultraviolet signal, an infrared signal, light in the visible spectrum.

In one embodiment, the external receiving unit comprises a unit for determination of the geographical location of the external receiving unit. The external receiving unit may be adapted to transmit the position of the external receiving unit and/or the detector to a third device e.g. an alarm central or the owner of the vehicle or to the mobile telephone of the driver or owner of the vehicle.

### BRIEF DESCRIPTION OF THE FIGURES

The invention will now be described with relation the figures in which:
Fig. 1 discloses an isometric view of a tank closing unit,
Fig. 2 discloses a cross-section of a first embodiment of the tank closing unit,
Fig. 3 discloses a cross-section of a second embodiment of the tank closing unit,
Fig. 4 discloses a cross-section of a third embodiment of the tank closing unit,
Fig. 5 discloses a fourth embodiment of the tank closing unit,
Fig. 6 discloses an embodiment, in which the detector is provided as a collar around the inlet/outlet,
Fig. 7 discloses an embodiment of the detector, and
Fig. 8 discloses communication between the tank closing unit and a number of external devices.

### DETAILED DESCRIPTION OF THE FIGURES

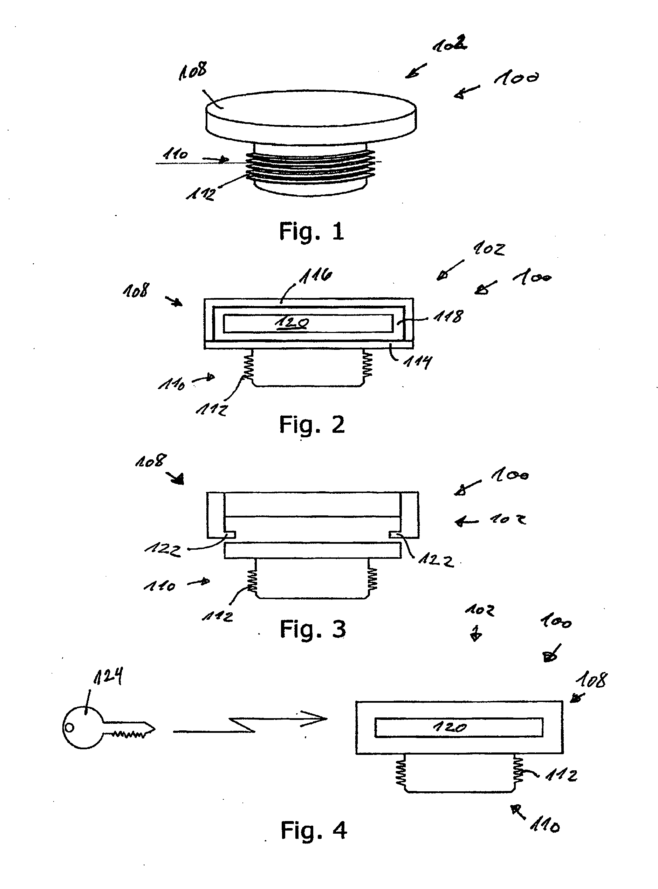

Fig. 1 discloses a tank closing unit 100 comprising a cover 102 adapted to cover an inlet/outlet 104 (not shown) of a tank 106 (also not shown). The tank closing unit 100 comprises a gripping part 108 which is adapted to be gripped by the user when mounting or demounting the tank closing unit 100 from the inlet/outlet 104. The tank closing unit 100 comprises an insertion part 110 which is adapted to be inserted into the inlet/outlet 104. On the outer surface of the insertion part 110 is provided a thread 112 which is adapted to engage a corresponding thread (not shown) of the inlet/outlet.

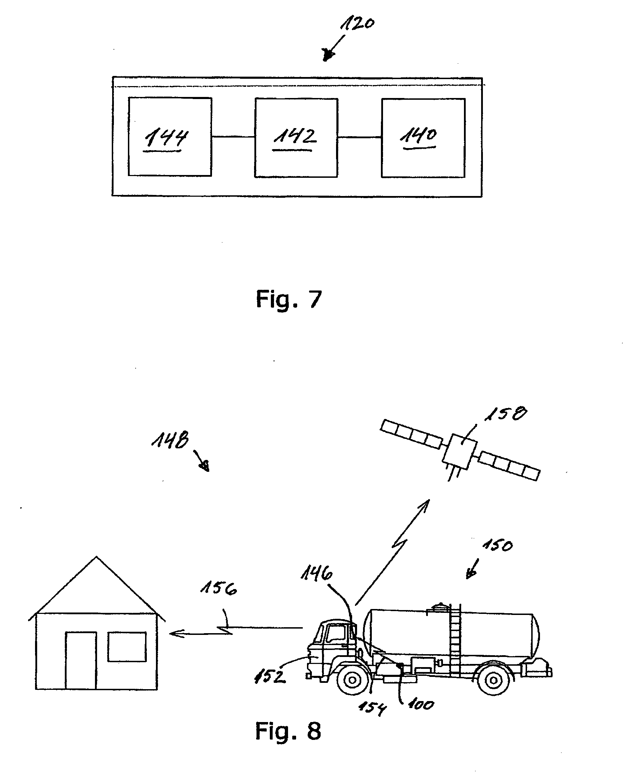

Fig. 2 discloses a cross-section of a first embodiment of the tank closing unit 100, comprising a cover 102, a gripping part 108, an insertion part 110 and a thread 112. In the embodiment of Fig. 2, the gripping part 108 comprises a lower part 114 and an upper part 116 which are fastened to each other e.g. by means of screws (not shown) or glue (not shown). A compartment 118 is defined between the lower part 114 and the upper part 116. In this compartment 118 the detector 120 is provided. The detector is described in further detail in relation to Fig. 7.

Fig. 3 discloses a cross-section of a second embodiment of the tank closing unit 100, comprising a cover 102, a gripping part 108, an insertion part 110 and a thread 112. In the embodiment of Fig. 3, the gripping part 108 is detachably attachable to the insertion part 110. In one embodiment, the gripping part 108 may be slided onto the insertion part 110 by moving the gripping part into or out of the figure, i.e. in a along the geometrical normal of the figure. In an alternative embodiment, the gripping part comprises a snap-lock connection 122 allowing the gripping part to be detachably attached to the insertion part 110 by moving the gripping part 108 downwards in the figure. The detector 120 (not shown in the figure) is provided inside the gripping part. In the embodiment of Figs. 2 and 3, the detector 120 may be removed by detaching the gripping part 108 from the insertion part 110. Thus in these embodiments, the detector 120 may be adapted to determine when the gripping part 108 is removed from the insertion part 110 and to activate an alarm when this is done, unless the detector 120 is deactivated. In Fig. 4 the gripping part 108 and the insertion part 110 forms a monolithic element e.g. by being injection molded into one piece or by being welded together. The detector is provided inside the gripping part 108.

In the embodiment of Fig. 4, the tank closing unit 100 may be activated or deactivated by means of a remote control 124 which in Fig. 4 is incorporated into a physical key. The physical key may be the key for the vehicle to which the tank closing unit 100 is attached. Alternatively or as a supplement, the key may be used to activate a physical lock in the tank closing unit 100 which is used to lock the tank closing unit 100 to the inlet/outlet 104. It will be appreciated that the tank closing units 100 of the remaining figures may similarly be activated or deactivated by means of a remote control 124, however for simplicity reasons the remote control is only described in connection with Fig. 4.

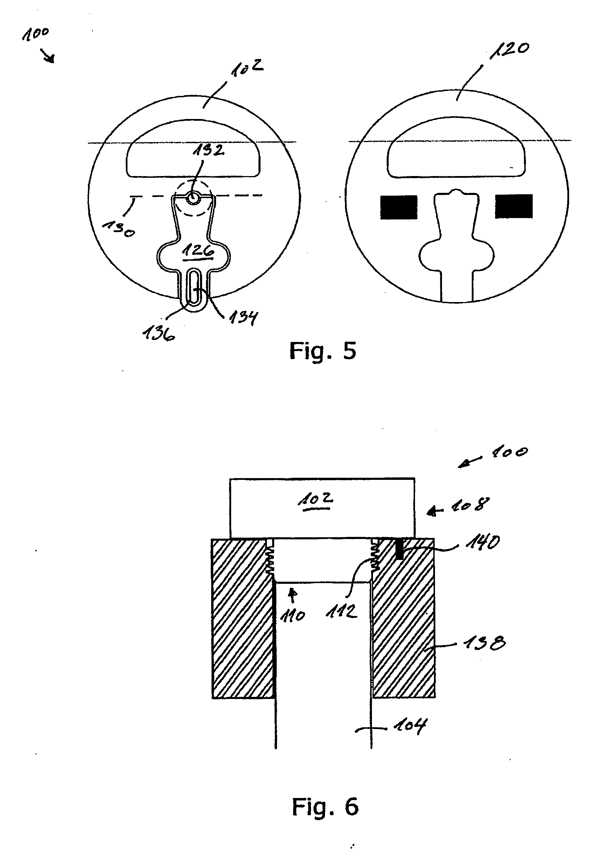

In Fig. 5 the tank closing unit 100 comprises a cover 102 and a detector 120. The cover 102 is a standard cover for a predetermined brand of vehicle and the detector 120 is shaped such that it may be attached to the cover 102 while not preventing the normal functions of the cover 102. In the embodiment of Fig. 5, the cover 102 comprises a locking handle 126 which is pivotabel about axis 130. Once the locking handle is pivoted such that it extends away from the cover 102, rotation about the pin 132 causes the cover to be locked or unlocked depending on whether the locking handle 126 is rotated clockwise or counter clockwise. When the locking handle 126 is in the position discloses in Fig. 5, the cover 102 is in its locked position. In this position a pad-lock locking member 134 extends through a passage 136 in the locking handle 126. In this position, a pad-lock may be fastened to the pad-lock locking member 134, whereby the locking handle 126 is prevented from pivoting about axis 130.

In order to allow a user to utilize the cover 102 provided for the vehicle by the manufacturer of the vehicle, the detector 120 is shaped so as to correspond to the shape of the cover 102. In one embodiment, the detector comprises a proximity sensor (not shown) which is adapted to determine when the locking handle 126 is pivoted away from a predetermined position e.g. the position disclosed in Fig. 5. Alternatively, a magnet sensor (not shown) may be provided which is adapted to determine when the locking handle 126 is moved away from a predetermined position. In the latter embodiment, a magnet may be incorporated into the locking handle 126 if the locking handle 126 is not made from a magnetic material.

In the embodiment of Fig. 6, the detector 120 is provided in the form of a collar 138 comprising a detector registration unit 140 which is arranged to determine when the cover 102 is removed from the inlet/outlet 104. The collar 138 may be fastened to the inlet/outlet 104 and may comprise a threaded inner surface, which is adapted to engage the corresponding thread 112 of the insertion part 110. In one embodiment, the collar 138 is fastened to the inlet/outlet 104 by being screwed onto the existing thread. Alternatively or as a supplement, a screw (not shown) may be arranged such that it may be screwed into the outer surface of the inlet/outlet 104, whereby the collar 138 is fastened to the inlet/outlet 104. Fig. 7 discloses an example of the electrical components of detector 120. The detector 120 comprises a detector registration unit 140 which is electrically connected to a processing unit 142. The detector registration unit 140 is arranged such that if the detector is removed from the cover 102 and/or if the cover 102 is removed from the inlet/outlet 104, then this will be registered by the detector registration unit 140. As the detector registration unit is connected - by means of conductors or wirelessly - to the processing unit 142, the latter unit will register this action. Upon such registration, the processing unit 142 will operate a transceiver unit 144 which is adapted to emit a signal e.g. a radio signal, to one or more external units 146. It will be appreciated that the transceiver unit 146 may alternatively be provided in the form of a separate transmitter unit and a separate receiver unit.

Fig. 8 discloses an alarm system 148 comprising a tank closing unit 100 and a first external receiver unit 146. The tank closing unit 100 is used to close the fuel tank of a vehicle 150. The first external receiver unit 146 is provided at a hidden place e.g. inside the drivers cabin 152 of the vehicle. When a thief tries to remove the tank closing unit 100, the tank closing unit 100 emits a signal 154 (e.g. a radio signal) to the first external receiver unit 146. In some embodiments, the external receiver unit 146 is adapted to emit a sound adapted to cause the thieves to run away. Alternatively, a driver sleeping inside the vehicle is warned by a tactile, visible or audible alarm such that the driver can start the engine and drive away - thus preventing the theft of the fuel. Alternatively or as a supplement, the first external receiver unit 146 emits a signal 156 to a second external receiver unit (not shown) which may be located near by e.g. in a house. Alternatively or as a supplement, the first receiver unit 146 sends a signal to a mobile device (not shown) via a satellite 158. The mobile device may be a mobile telephone. Moreover, the tank closing unit 100 may be adapted to communicate directly with the second external receiver unit i.e. not via the first external receiver unit.

## Claims

1. A tank closing unit (100) comprising:
- a cover (102) adapted to be attached to an inlet (104) and/or outlet (104) of a tank (106); and
- a detector (120) comprising:
- a detector registration unit (140) adapted to determine when the cover (100) is moved relative to the inlet (104) or outlet (104), or when the detector (120) is removed from the inlet (104) or the outlet (104), and
- a detector transmitter unit (144) adapted to emit a signal (154) when the cover (102) is moved or removed,
wherein the cover (102) comprises a compartment (118) wherein the detector registration unit (140) is provided, **characterised in that** the tank closing unit (100) comprises two parts (114, 116) which are twistable relative to each other and an electrical contact is arranged such that when the two parts (114, 116) are twisted relative to each other, the contact is activated or deactivated, where one of the two parts (114, 116) are coupled to the cover (102), whereby rotation/twisting of the cover (102) causes the contact to be activated or deactivated.

2. A tank closing unit (100) according to claim 1, wherein the detector transmitter unit (144) is adapted to transmit an electromagnetic signal (154) when the cover (102) is moved or removed.

3. A tank closing unit (100) according to claim 1 or 2, wherein the detector (120) is detachably attachable to the cover (102).

4. A tank closing unit (100) according to any of the preceding claims, wherein the detector registration unit (140) comprises one or more of a magnetic sensor, an acceleration sensor and an electrical contact.

5. A tank closing unit (100) according to any of the preceding claims, further comprising a key (124) which is adapted to deactivate the detector (120).

6. A tank closing unit (100) according to claim 5, wherein the detector (120) comprises a detector receiver unit adapted to receive an electromagnetic signal (154) and/or an electrically signal, and wherein the key (124) comprises a key transmitter unit which is adapted to communicate with the detector receiving unit.

7. A tank closing unit (100) according to claim 6, wherein the detector receiver unit and the key transmitter unit are adapted to communicate by means of coded signals.

8. A tank closing unit (100) according to any of the preceding claims, wherein the detector (120) has a unique ID for identification of the detector (120).

9. A system (148) comprising a tank closing unit (100) according to any of the claims 1-8 and an external receiver unit (146) adapted to detect a signal (156) transmitted from the detector transmitter unit (144).

10. A system (148) comprising a tank closing unit (102) according to any of the claims 1-8 and an external receiver unit (146) adapted to detect a signal transmitted from the detector transmitter unit (144).

11. A system (148) according to claim 9 or 10, wherein the external receiving unit (146) is adapted to activate an acoustic and/or a tactile and/or visual signal, and/or to transmit a signal (156) to an external unit.

12. A system (148) according to claim 9 or 11, wherein the external receiving unit (146) comprises a unit for determination of the geographical location of the external receiving unit (146).

## Patentansprüche

1. Eine Tankverschlusseinheit (100), umfassend:
- einen Deckel (102), so angepasst, dass er an einen Einlass (104) und/oder einen Auslass (104) eines Tanks (106) angeschlossen werden kann; und
- einen Detektor (120), umfassend:
- eine Detektoraufzeichnungseinheit (140), angepasst, um zu bestimmen, wenn der Deckel (100) in Bezug zu dem Einlass (104) oder Auslass (104) bewegt wird, oder wenn der Detektor (120) vom Einlass (104) oder Auslass (104) entfernt wird, und
- eine Detektorsendeeinheit (144), angepasst, um ein Signal (151) zu senden, wenn der Deckel (102) bewegt oder entfernt wird,
wobei der Deckel (102) ein Fach (118) umfasst, in dem die Detektoraufzeichnungseinheit (140) installiert ist, **dadurch gekennzeichnet, dass** die Tankverschlusseinheit (100) zwei Teile (114, 116) umfasst, die zueinander drehbar sind, und ein elektrischer Kontakt so gestaltet ist, dass, wenn die beiden Teile (114, 116) zueinander gedreht werden, der Kontakt aktiviert oder deaktiviert wird, wobei eines der beiden Teile (114, 116) mit dem Deckel (102) verbunden ist, wodurch die Rotation/Verdrehung des Deckels (102) die Aktivierung oder Deaktivierung des Kontaktes verursacht.

2. Eine Tankverschlusseinheit (100) gemäß Anspruch 1, wobei die Detektorsendeeinheit (144) angepasst ist, um ein elektromagnetisches Signal (154) zu versenden, wenn der Deckel (102) geöffnet oder entfernt wird.

3. Eine Tankverschlusseinheit (100) gemäß Anspruch 1 oder 2, wobei der Detektor (120) abnehmbar am Deckel (102) befestigt werden kann.

4. Eine Tankverschlusseinheit (100) gemäß irgendeinem der vorherigen Ansprüche, wobei die Detektoraufzeichnungseinheit (140) einen oder mehrere Magnetsensoren, einen Beschleunigungssensor und einen elektrischen Kontakt umfasst.

5. Eine Tankverschlusseinheit (100) gemäß irgendeinem der vorherigen Ansprüche, die weiterhin einen Schlüssel (124) umfasst, der für die Deaktivierung des Detektors (120) angepasst ist.

6. Eine Tankverschlusseinheit (100) gemäß Anspruch 5, wobei der Detektor (120) eine Detektorempfängereinheit umfasst, die für den Empfang eines elektromagnetischen Signals (154) und/oder eines elektrischen Signals angepasst ist, wobei der Schlüssel (124) eine Schlüsselsendeeinheit umfasst, die angepasst ist, um mit der Detektorempfängereinheit zu kommunizieren.

7. Eine Tankverschlusseinheit (100) gemäß Anspruch 6, wobei die Detektorempfängereinheit und die Schlüsselsendeeinheit angepasst sind, um mittels verschlüsselter Signale zu kommunizieren.

8. Eine Tankverschlusseinheit (100) gemäß irgendeinem der vorhergehenden Ansprüche, wobei der Detektor (120) eine einzige ID für die Identifizierung des Detektors (120) hat.

9. Ein System (148), das eine Tankverschiusseinheit (100) gemäß irgendeinem der Ansprüche von 1-8 und eine externe Empfangseinheit (146) umfasst, die angepasst ist, um ein Signal (156) zu erkennen, das von der Detektorsendeeinheit (144) versandt wird.

10. Ein System (148), das eine Tankverschlusseinheit (102) gemäß irgendeinem der Ansprüche von 1-8 und eine externe Empfangseinheit (146) umfasst, die angepasst ist, um ein von der Detektorsendeeinheit (144) übertragenes Signal zu erkennen.

11. Ein System (148) gemäß Anspruch 9 oder 10, wobei die externe Empfangseinheit (146) angepasst ist, um ein akustisches und/oder taktiles und/oder visuelles Signal zu aktivieren, und/oder ein Signal (156) an eine externe Einheit zu übertragen.

12. Ein System (148) gemäß Anspruch 9 oder 11, wobei die externe Empfangseinheit (146) eine Einheit für die Bestimmung der geografischen Lage der externen Empfangseinheit (146) umfasst.

## Revendications

1. Unité de fermeture de réservoir (100), comprenant :
- un couvercle (102) conçu pour être attaché à un orifice d'admission (104) et/ou à un orifice de décharge (104) d'un réservoir (106) ; et
- undétecteur (120) comportant :
- une unité d'alignement de détecteur (140) conçue pour détecter le moment auquel le couvercle (100) est déplacé par rapport à l'orifice d'admission (104) ou à l'orifice de décharge (104), ou le moment auquel le détecteur (120) est enlevé de l'orifice d'admission (104) ou de l'orifice de décharge (104), et
- une unité de transmission de détecteur (144) conçue pour émettre un signal (154) lorsque le couvercle (102) est déplacé ou enlevé,
cas dans lequel le couvercle (102) comprend un compartiment (118) dans lequel est montée l'unité d'alignement de détecteur (140), **caractérisée en ce que** l'unité de fermeture de réservoir (100) comporte deux parties (114, 116) lesquelles sont aptes à être soumises à un mouvement de torsion l'une par rapport à l'autre, et un contact électrique est agencé de façon à ce que, lorsque les deux parties (114, 116) sont tordues l'une par rapport à l'autre, le contact sera activé ou désactivé, alors que l'une des deux parties (114, 116) est couplée au couvercle (102), par conséquent une rotation/une torsion du couvercle (102) provoquera l'activation ou la désactivation du contact.

2. Unité de fermeture de réservoir (100) selon la revendication 1, l'unité de transmi ssion de détecteur (144) étant conçue pourtransmettre un signal électromagnétique (154) lorsque le couvercle (102) est déplacé ou enlevé.

3. Unité de fermeture de réservoir (100) selon la revendication 1 ou 2, le détecteur (120) étant apte être attaché de façon détachable aucouvercle (102).

4. Unité de fermeture de réservoir (100) selon l'une quelconque des revendications précédentes, l'unité d'alignement de détecteur (140) comprenant un ou plusieurs des postes suivants, à savoir un capteur magnétique, un capteur d'accélération et un contact électrique.

5. Unité de fermeture de réservoir (100) selon l'une quelconque des revendications précédentes, comprenant en outre une clé (124) laquelle est conçue pour désactiver le détecteur (120).

6. Unité de fermeture de réservoir (100) selon la revendication 5, le détecteur (120) comprenant une unité de réception de détecteur conçue pour recevoir un signal électromagnétique (154) et/ou un signal électrique, et cas dans lequel la clé (124) comporte une unité de transmission de clé laquelle est conçue pour communiquer avec l'unité de réception de détecteur.

7. Unité de fermeture de réservoir (100) selon la revendication 6, l'unité de réception de détecteur et l'unité de transmission de clé étant conçues pour communiquer au moyen de signaux codés.

8. Unité de fermeture de réservoir (100) selon l'une quelconque des revendications précédentes, le détecteur (120) possédant un identifiant inédit pour permettre l'identification du détecteur (120).

9. Système (148) comportant une unité de fermeture de réservoir (100) selon l'une quelconque des revendications 1 à 8, et une unité réceptrice externe (146) conçue pour détecter un signal (156) transmis à partir de l'unité de transmission de détecteur (144).

10. Système (148) comportant une unité de fermeture de réservoir (102) selon l'une quelconque des revendications 1 à 8, et une unité réceptrice externe (146) conçue pour détecter un signal transmis à partir de l'unité de transmission de détecteur (144).

11. Système (148) selon la revendication 9 ou 10, l'unité réceptrice externe (146) étant conçue pour activer un signal acoustique et/ou tactile et/ou visuel, et pour transmettre un signal (156) à une unité externe.

12. Système (148) selon la revendication 9 ou 11, l'unité réceptrice externe (146) comprenant une unité pour déterminer la localisation géographique de l'unité réceptrice externe (146).
